# FASCICULE DE BREVET EUROPEEN

(11) **EP 3 040 873 B1**
(45) Date de publication et mention de la délivrance du brevet: **11.09.2019**
(21) Numéro de dépôt: 15200836.3
(22) Date de dépôt: 17.12.2015
(51) Int. Cl.: G06F 13/40, G06F 21/60, H04L 29/06

(54) **SYSTÈME ÉLECTRONIQUE CONFIGURABLE DE TRANSFERT DE DONNÉES ET PROCÉDÉ DE CONFIGURATION ASSOCIÉ**
KONFIGURIERBARES ELEKTRONISCHES DATENÜBERTRAGUNGSSYSTEM, UND ENTSPRECHENDES KONFIGURATIONSVERFAHREN
CONFIGURABLE ELECTRONIC SYSTEM OF TRANSFER OF DATA AND ASSOCIATED CONFIGURATION METHOD

(30) Priorité: 17.12.2014 FR 1402887
(43) Date de publication de la demande: 06.07.2016
(73) Titulaire: THALES, 92400 Courbevoie (FR)
(72) Inventeur: THABUTEAU, Simon, 92622 GENNEVILLIERS CEDEX (FR)
(74) Mandataire: Lavoix

(56) Documents cités:
- EP-A1- 1 962 215
- WO-A1-2013/116673
- WO-A2-2004/012373
- CN-A- 102 880 762
- GB-A- 2 503 245
- US-A1- 2004 130 346
- US-A1- 2012 311 690
- US-A1- 2014 136 657
- JENS RETTKOWSKI ET AL: "RAR-NoC: A reconfigurable and adaptive routable Network-on-Chip for FPGA-based multiprocessor systems", 2014 INTERNATIONAL CONFERENCE ON RECONFIGURABLE COMPUTING AND FPGAS (RECONFIG14), 10 December 2014 (2014-12-10), pages 1-6, XP055359819, DOI: 10.1109/ReConFig.2014.7032552 ISBN: 978-1-4799-5943-3

## Description

La présente invention concerne un système électronique configurable de transfert de données.

La présente invention concerne également un procédé de configuration d'un tel système électronique.

De manière générale, les informations sensibles sont traitées et transmises différemment suivant leur niveau de classification. Une information est dite sensible lorsque sa divulgation est susceptible d'avoir un impact sur des entités concernées par cette information.

Pour des domaines critiques comme la défense, les informations sensibles sont, par exemple, traitées sur des terminaux dédiés et transitent via des passerelles spécialisées. Le rôle de ces passerelles est d'appliquer des politiques de sécurité adaptées au contexte opérationnel et à chaque type d'information. Les politiques de sécurité sont, par exemple, des vérifications de conformité protocolaire, des analyses de l'innocuité des données transmises et des analyses comportementales.

De telles passerelles spécialisées sont, par exemple, des passerelles multi-niveaux de sensibilité. Une passerelle multi-niveaux comporte des compartiments de traitement, associés à un environnement d'exécution et à des moyens de calcul spécifiques, et interconnectés par divers moyens réseaux, et notamment des équipements de type diode permettant d'orienter les flux et d'empêcher de manière logique et physique la remontée d'information depuis un niveau de sensibilité bas vers un niveau de sensibilité élevé. Un niveau de sensibilité bas regroupe une catégorie d'informations propres à être divulguées au public. Un niveau de sensibilité haut, ou élevé, regroupe des catégories d'informations considérées confidentielles, secrètes ou très secrètes.

Il est également connu des passerelles multi-niveaux du document US 2014/136657 A et du document CN 102 880 762 A.

Cependant, l'intégration d'une passerelle multi-niveaux comportant de tels équipements est complexe et onéreuse. De tels équipements peuvent, en outre, se révéler encombrants.

Il existe donc un besoin pour la mise en oeuvre d'un système électronique permettant de faciliter la conception et l'intégration de réseaux de différents niveaux de sensibilité, et de les interconnecter de manière simple et reconfigurable, en orientant les flux pour prévenir les fuites de données lors du transfert d'informations entre des réseaux de différents niveaux de sensibilité.

La présente invention est définie par les revendications indépendantes jointes auxquelles il convient de référer. Des caractéristiques avantageuses sont exposées dans les revendications dépendantes. Les modes de réalisation ou exemples décrits dans la présente description ci-dessous qui ne sont pas couverts par les revendications sont considérés comme ne faisant pas partie de l'invention.

A cet effet l'invention a pour objet un système électronique configurable de transfert de données, le système électronique comprenant :
- au moins un module électronique de traitement de données, et
- une pluralité de paires de liaisons unidirectionnelles de transfert de données, chaque liaison unidirectionnelle comportant au moins un composant unidirectionnel commandable entre une configuration activée de transfert des données et une configuration désactivée de blocage des données,
chaque paire respective de liaisons unidirectionnelles étant reliée à au moins un module électronique et comportant deux liaisons unidirectionnelles agencées en sens opposés.

Suivant d'autres aspects avantageux de l'invention, le système électronique comprend une ou plusieurs des caractéristiques suivantes, prise(s) isolément ou suivant toutes les combinaisons techniquement possibles :
- au moins un composant unidirectionnel commandable est un composant électronique.
- au moins un composant unidirectionnel commandable est un composant optique.
- chaque composant de chaque liaison est commandable indépendamment des composants des autres liaisons.
- chaque composant est commandable à distance via un module de commande indépendant du système électronique.
- au moins l'un des modules électroniques comprend un circuit intégré dédié ou un composant logique programmable.
- chaque liaison est conforme à une norme filaire telle que la norme IEEE 802.3 ou la norme PCI-Express.
- au moins l'un des modules comprend un système informatique formé d'un processeur et d'une mémoire de stockage permettant la mise en oeuvre d'un système d'exploitation et d'au moins une application stockés dans la mémoire.
- les modules électroniques sont disposés sous forme d'une matrice.
- le système électronique est en forme d'un circuit intégré.

L'invention a également pour objet un procédé de configuration d'un système électronique configurable tel que défini ci-dessus, le procédé comprenant :
- l'envoi d'une commande de désactivation de chaque composant, et
- l'envoi d'une commande d'activation d'une sélection de composants pour définir un chemin de transfert de données.

Suivant d'autres aspects avantageux de l'invention, le procédé comprend une ou plusieurs des caractéristiques suivantes, prise(s) isolément ou suivant toutes les combinaisons techniquement possibles :
- le système électronique comporte au moins six modules électroniques, au moins quatre modules étant chacun connectable à au moins un élément externe au système électronique par au moins une liaison unidirectionnelle de transfert de données depuis l'élément externe jusqu'au module et au moins une liaison unidirectionnelle de transfert de données depuis le module jusqu'à l'élément externe,
   lors de l'étape d'envoi d'une commande d'activation, la sélection de composants est activée pour permettre le transfert bidirectionnel de données entre, d'une part, deux réseaux et trois modules et, d'autre part, deux autres réseaux et trois autres modules, l'un des trois autres modules comportant un circuit intégré dédié ou un composant logique programmable, le système électronique formant alors une architecture cryptographique.
- le système électronique comporte au moins six modules électroniques, au moins trois modules électroniques étant chacun connectable à au moins un élément externe au système électronique par au moins une liaison unidirectionnelle de transfert de données depuis l'élément externe jusqu'au module et au moins une liaison unidirectionnelle de transfert de données depuis le module jusqu'à l'élément externe,
   lors de l'étape d'envoi d'une commande d'activation, la sélection de composants est activée pour permettre le transfert bidirectionnel de données entre trois réseaux et trois modules et pour permettre le transfert unidirectionnel de données entre les trois modules et trois autres modules, le système électronique formant alors un système asymétrique multiniveaux.
- le système électronique comporte au moins neuf modules électroniques, au moins deux modules électroniques étant chacun connectable à au moins un élément externe au système électronique par au moins une liaison unidirectionnelle de transfert de données depuis l'élément externe jusqu'au module et au moins une liaison unidirectionnelle de transfert de données depuis le module jusqu'à l'élément externe,
   lors de l'étape d'envoi d'une commande d'activation, la sélection de composants est activée pour permettre le transfert bidirectionnel de données entre trois réseaux et neuf modules et pour permettre le transfert unidirectionnel de données entre trois des neuf modules, le système électronique formant alors un système d'analyse de flux réseau.

L'invention a également pour objet un procédé de configuration selon la revendication 1.

Suivant d'autres aspects avantageux de l'invention, le procédé comprend une ou plusieurs des caractéristiques des revendications 2 à 7, prise(s) isolément ou suivant toutes les combinaisons techniquement possibles.

D'autres caractéristiques et avantages de l'invention apparaîtront à la lecture de la description qui suit de mode de réalisation de l'invention, donnée uniquement à titre d'exemple non limitatif et en référence aux dessins annexés, dans lesquels :
- la figure 1 est une représentation schématique d'un système électronique configurable de transfert de données, selon un mode de réalisation de l'invention,
- la figure 2 est un organigramme d'un procédé de configuration, du système électronique configurable de la figure 1,
- la figure 3 est une représentation schématique du système électronique de la figure 1 selon un premier exemple de mise en oeuvre du système électronique, et
- les figures 4 à 12 sont des vues analogues à celle de la figure 3 selon respectivement des deuxième, troisième, quatrième, cinquième, sixième, septième, huitième, neuvième et dixième exemples de mise en oeuvre du système électronique.

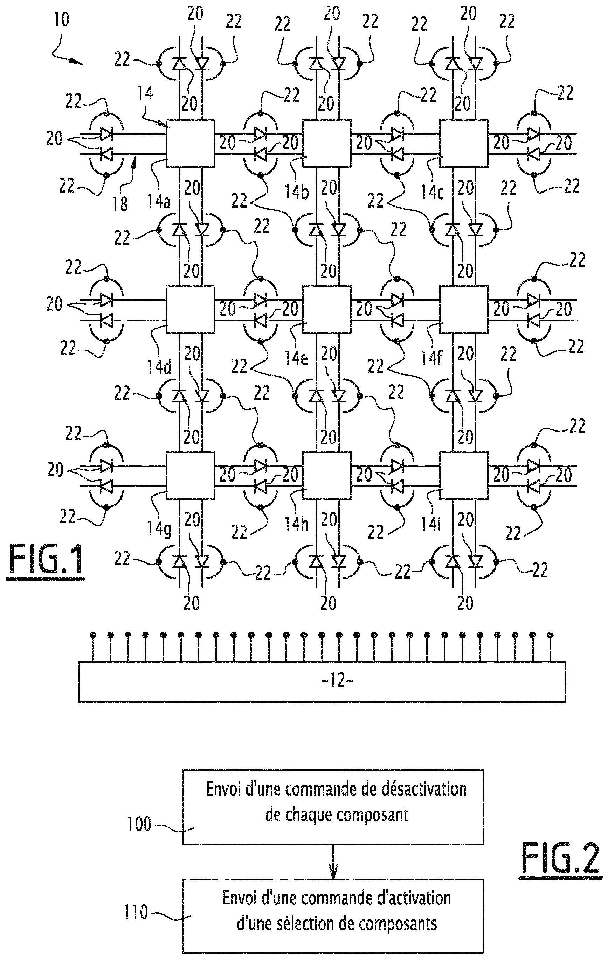

Sur la figure 1, un système électronique 10 permet de transférer des données entre différents réseaux ayant des niveaux de sensibilité différents. Un niveau de sensibilité regroupe une catégorie spécifique d'informations. Les niveaux de sensibilité sont généralement choisis parmi un groupe consistant en : très secret, secret, confidentiel, restreint et non classifié. Une information classifiée est une information sensible dont l'accès est restreint par une loi ou un règlement à un groupe spécifique de personnes.

Le système électronique 10 est pilotable à distance par un module de commande 12 indépendant du système électronique 10. Le module de commande 12 est, par exemple, un calculateur. Le module de commande 12 est configuré pour envoyer des signaux de commande, également appelés ordres de commande, au système électronique 10. Dans une implémentation particulière, le module de commande 12 est un dispositif isolé du système 10 qui pilote l'activation de liens unidirectionnels tout en garantissant que l'exécution des procédures d'envoi des signaux de commande est réalisée sous le contrôle d'un dispositif de sécurité vérifiant l'authentification de la source des ordres de commande ou de la source des séquences de commandes exécutées automatiquement par le module de commande 12.

Les signaux de commandes du module 12 sont, par exemple, envoyés selon un protocole Ethernet connu en soi, conforme aux normes du groupe IEEE 802.3, ou tout équivalent filaire, ou suivant un protocole de transmission sans fil suivant les normes du groupe IEEE 802.11 (Wi-Fi) ou du groupe IEEE 802.15 (Bluetooth).

Le système électronique 10 est configuré pour être intégré dans un équipement d'interconnexion réseau. En particulier, le système électronique 10 est, par exemple, intégrable dans un rack 19 pouces connu en soi. En variante, le système électronique 10 est intégrable dans un boîtier aéronautique. Encore en variante, le système électronique 10 est directement intégré dans un unique composant tel qu'un circuit intégré de type ASIC (acronyme de l'anglais *Application-Specific Integrated Circuit)* ou de type FPGA (acronyme de l'anglais *Field-Programmable Gate Array*) pour les besoins de différents équipements tels que des sondes réseau. Un tel système électronique 10 intégré permet, par exemple, de réaliser un réseau sur puce (en anglais *Network-on-Chip*)*.* Un tel système électronique 10 est alors particulièrement compact avec des dimensions, par exemple, inférieures à 5 centimètres (cm) par 5 cm par 0,5 cm.

Le système électronique 10 est configurable sur ordre du module de commande 12. La configuration du système électronique 10 est, par exemple, statique, c'est-à dire unique et définitive. En variante, la configuration du système électronique 10 est dynamique, c'est-à-dire que la configuration est modifiable pour reconfigurer les interconnexions entre les différents éléments du système électronique 10. Différentes configurations dynamiques du système électronique 10 permettent de mettre en oeuvre des chemins de transfert de données différents.

Le système électronique 10 comprend au moins un module électronique 14 de traitement de données et une pluralité de paires de liaisons unidirectionnelles 18 de transfert de données.

Chaque paire respective de liaisons unidirectionnelles 18 comporte deux liaisons unidirectionnelles 18 agencées en sens opposés. Chaque paire de liaisons 18 est reliée à au moins un module électronique 14.

Dans l'exemple de réalisation de la figure 1, le système électronique 10 comprend neuf modules 14 agencés sous forme d'une matrice carrée à trois lignes et trois colonnes.

En variante, le système électronique 10 comprend six modules 14 agencés sous forme d'une matrice à deux lignes et trois colonnes ou d'une matrice à trois colonnes et deux lignes, ou bien seize modules 14 agencés sous forme d'une matrice carrée à quatre lignes et quatre colonnes, ou encore vingt-cinq modules 14 agencés sous forme d'une matrice carrée à cinq lignes et cinq colonnes.

Dans l'exemple de réalisation de la figure 1, chaque module 14 est configuré pour être relié à au moins un autre module 14 par une liaison 18.

Les modules électroniques 14 sont reliés entre eux par paires. Les deux modules 14 d'une paire respective sont reliés l'un à l'autre via deux liaisons unidirectionnelles 18 respectives agencées en sens opposés.

Au moins un module 14 comprend un système informatique formé par un processeur, une mémoire de stockage ainsi que des liens de communication (non représentés) associés au processeur. Le processeur est, par exemple, un processeur multi-coeur. La mémoire comprend, par exemple, un système d'exploitation et au moins une application. La ou les applications stockées dans la mémoire sont, par exemple, des applications permettant de remplir une fonction de manipulation de données, par exemple, une fonction de routage, de filtrage, de chiffrement, de vérification de signature ou d'analyse de flux de donnée.

En variante ou en complément, la mémoire comprend plusieurs systèmes d'exploitation et plusieurs applications. Chaque module 14 est configuré pour recevoir une solution de virtualisation permettant le cloisonnement entre les systèmes d'exploitation et/ou les applications du module 14. La virtualisation consiste à intégrer plusieurs ensembles logiciels, généralement mis en oeuvre sur plusieurs modules tels que des systèmes d'exploitation et des applications, sur un seul module. La solution de virtualisation permet de reproduire l'architecture du système 10 à l'intérieur d'un module 14, et ce, de manière virtuelle, c'est-à-dire en mettant en oeuvre une architecture informatique virtuelle comportant un hyperviseur et plusieurs instances isolées du logiciel normalement contenues dans un module 14 non doté de capacités de virtualisation. L'homme du métier comprendra que la virtualisation permet d'ajouter une dimension à l'architecture en subdivisant un module en plusieurs modules virtuels.

En variante, au moins un module 14 comporte un circuit intégré dédié. Selon cette variante, ledit module 14 est, de préférence formé dudit circuit intégré dédié. Le circuit intégré dédié est, par exemple, un ASIC. Le circuit intégré dédié permet, de mettre en oeuvre des algorithmes de traitement sur des volumes importants de données dépassant les capacités de calcul des modules 14 qui ne comportent pas de circuit intégré dédié.

En variante encore ou en complément, au moins un module 14 comprend un composant logique programmable, par exemple, un FPGA (acronyme de l'anglais F*ield-Programmable Gate Array*) qui est une variante reprogrammable d'un ASIC.

Dans le cas où le système électronique 10 comporte au moins un module 14 comprenant un circuit intégré dédié ou un composant logique programmable, de tels modules sont appelés « modules 14 spécifiques », les autres modules 14 sont appelés « modules 14 génériques ».

Chaque liaison 18 est configurée pour relier les deux modules 14 d'une paire respective de module ou pour relier un module 14 respectif et un élément externe au système électronique 10. Les éléments externes au système électronique 10 sont, par exemple, choisis parmi : des réseaux publics, des réseaux locaux, des systèmes antennaires, des serveurs, des routeurs ou encore des périphériques tel que des caméras.

Chaque liaison 18 est unidirectionnelle. Chaque liaison 18 permet donc de transférer des données selon un unique sens de circulation depuis un module d'une paire vers l'autre module de la paire ou depuis un élément externe correspondant vers un module d'une paire, ou encore depuis un module d'une paire vers un élément externe correspondant.

Chaque liaison 18 est en outre configurée pour bloquer le passage de données selon le sens opposé au sens de circulation.

Deux liaisons 18 reliant deux modules d'une paire ou un module d'une paire et un élément externe sont dites de sens opposé lorsque le sens de circulation des données de chaque liaison 18 est différent.

Dans l'exemple de la figure 1, les deux modules 14 d'une paire respective sont reliés entre eux via deux liaisons unidirectionnelles 18 respectives agencées en sens opposés, ces deux liaisons 18 forment une paire de liaisons 18. Une paire de liaisons 18 est donc reliée à au moins un module électronique 14.

Ainsi, deux modules 14 d'une paire ou un module 14 et un élément externe sont reliés l'un à l'autre par au moins deux liaisons 18 de sens opposés.

Dans l'exemple de la figure 1, chaque module électronique 14 appartenant à au plus trois paires de modules est, en outre, connectable à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

En particulier, dans l'exemple de la figure 1, chaque module 14 appartenant à exactement trois paires de modules est configuré pour être relié à au moins un élément externe, chacun via deux liaisons 18 de sens opposés. Chaque module 14 appartenant à exactement deux paires de modules est configuré pour être relié à au moins deux éléments externes, chacun via deux liaisons 18 de sens opposés.

Par exemple, comme illustré sur la figure 1, chaque module 14 est connecté à huit liaisons 18 : quatre liaisons unidirectionnelles 18 de transfert de données vers le module 14 et quatre autres liaisons unidirectionnelles 18 de transfert de données depuis le module 14.

Chaque liaison 18 est conforme à une norme filaire. La norme filaire est, par exemple, la norme IEEE 802.3 ou la norme PCI-Express. D'autres types de liaisons filaires, optiques ou électriques, sont encore envisagés.

Chaque liaison 18 est commandable. Chaque liaison 18 comporte au moins un composant unidirectionnel commandable 20 entre une configuration activée de transfert des données et une configuration désactivée de blocage des données.

Au moins l'un des composants unidirectionnels commandables 20 est un composant électronique. Le composant électronique est, par exemple, un transistor ou un thyristor. Le composant 20 comporte une électrode de commande 22, telle qu'une électrode de grille. Le composant 20 est commandable via un courant appliqué à l'électrode de commande 22.

En variante et/ou en complément, au moins l'un des composant unidirectionnel commandable 20 est un composant optique, tel qu'un opto-isolateur commandable, non représenté.

Dans une implémentation particulière de la solution, l'élément commandable 20 est intégré à des composants de connexion externes, tels que des pads, d'un circuit intégré.

Chaque composant 20 est commandable entre une configuration activée de transfert unidirectionnel de données selon laquelle les données sont transférées uniquement vers le composant 20 et une configuration désactivée de blocage des données selon laquelle aucun transfert de données vers le composant 20 n'est possible.

Chaque composant 20 de chaque liaison 18 est commandable indépendamment des composants des autres liaisons 18. Chaque composant 20 est commandable à distance via le module de commande 12.

Le procédé de configuration du système électronique 10 va maintenant être décrit en référence à la figure 2.

Initialement, le procédé comprend une étape 100 de désactivation de l'ensemble des liaisons 18 en désactivant chaque composant 20 de chaque liaison 18 via le module de commande 12. Pour cela, le module de commande 12 envoie une commande de désactivation à chaque composant 20.

Puis, le procédé comprend une étape 110 d'activation d'une sélection de composants 20 de liaisons 18 pour définir un chemin de transfert de données. Pour cela, le module de commande 12 envoie une commande d'activation d'une sélection de composants 20. Le chemin de transfert de données permet, par exemple, de transférer des données entre des modules 14 et différents éléments externes.

Lors de l'étape d'activation 110, une connexion de transfert de données entre les deux modules 14 d'une paire respective est, par exemple, désactivée en désactivant l'ensemble des liaisons 18 reliant les deux modules 14. Un transfert de données entre les deux modules 14 d'une paire respective est, par exemple, rendu unidirectionnel en désactivant une seule des liaisons 18 permettent le transfert de données entre les deux modules.

Pour la suite de la description, les neuf modules 14 du mode de réalisation illustré sur les figures 1 et 3 à 12 sont chacun désignés par un terme permettant de définir leur agencement dans la matrice carrée à trois lignes et trois colonnes du système électronique 10. Ainsi, le module 14 situé sur la première ligne et la première colonne de la matrice est appelé premier module 14A. Le module 14 situé sur la première ligne et la deuxième colonne de la matrice est appelé deuxième module 14B. Le module 14 situé sur la première ligne et la troisième colonne de la matrice est appelé troisième module 14C. Le module 14 situé sur la deuxième ligne et la première colonne de la matrice est appelé quatrième module 14D. Le module 14 situé sur la deuxième ligne et la deuxième colonne de la matrice est appelé cinquième module 14E. Le module 14 situé sur la deuxième ligne et la troisième colonne de la matrice est appelé sixième module 14F. Le module 14 situé sur la troisième ligne et la première colonne de la matrice est appelé septième module 14G. Le module 14 situé sur la troisième ligne et la deuxième colonne de la matrice est appelé huitième module 14H. Le module 14 situé sur la troisième ligne et la troisième colonne de la matrice est appelé neuvième module 14l.

Pour la suite de la description, le terme « module 14 » désigne un module 14 de manière générale, indépendamment de son agencement dans le système électronique 10, et le terme « n-ème module 14n » désigne un module 14 agencé de manière spécifique dans le système électronique 10, comme indiqué ci-dessus.

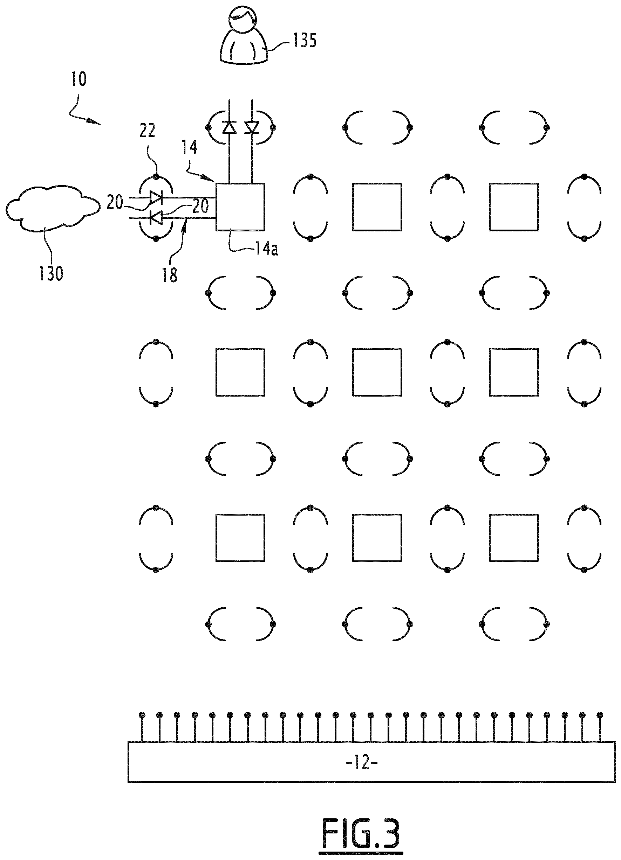

La figure 3 illustre un premier exemple de mise en oeuvre du système électronique 10.

Selon ce premier exemple de mise en oeuvre, au moins un module électronique 14 est connectable à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce premier exemple de mise en oeuvre, lors de l'étape 110 d'activation, les composants 20 sont sélectionnés et activés pour permettre le transfert bidirectionnel de données entre, d'une part, un module 14 et un premier réseau 130 et, d'autre part, un module 14 et un deuxième réseau 135. Le module 14 est, par exemple, le premier module 14A comme illustré sur la figure 1. Une telle configuration du système électronique 10 permet de former un pare-feu. Un pare-feu est un logiciel et/ou un matériel permettant de faire respecter la politique de sécurité du réseau. Une politique de sécurité d'un réseau définit les communications autorisées sur un réseau informatique.

En particulier, sur cette figure 3, les données sont propres à être transférées entre le premier réseau 130 et le deuxième réseau 135 via deux paires de liaisons 18 de sens opposés. Seul un module 14 sert d'intermédiaire entre le premier réseau 130 et le deuxième réseau 135.

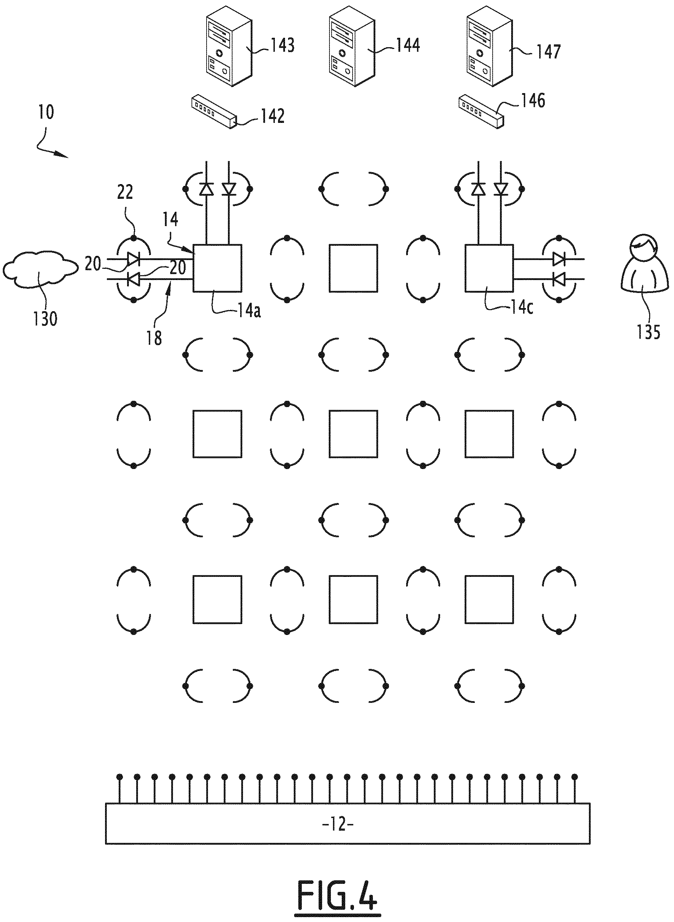

La figure 4 illustre un deuxième exemple de mise en oeuvre du système électronique 10 illustré en figure 1.

Selon ce deuxième exemple de mise en oeuvre, au moins deux modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce deuxième exemple de mise en oeuvre, les composants 20 sont sélectionnés et activés pour permettre le transfert bidirectionnel de données entre le premier module 14A et le premier réseau 130 et entre le premier module 14A et un premier routeur 142. Le premier routeur 142 est en interaction avec un premier serveur 143. Le premier serveur 143 est en interaction avec un deuxième serveur 144. Les composants 20 sont également activés pour permettre le transfert de données entre le troisième module 14C et le deuxième réseau 135 et entre le troisième module 14C et un deuxième routeur 146. Le deuxième routeur 146 est en interaction avec un troisième serveur 147. Le troisième serveur 147 est en interaction avec le deuxième serveur 144. Une telle configuration du système électronique 10 permet de former les deux pare-feu d'une zone démilitarisée. Une zone démilitarisée est un sous-réseau séparé d'un réseau public et isolé d'un réseau local par deux pare-feux.

En particulier, sur cette figure 4, les données sont propres à être transférées entre le premier réseau 130 et le premier routeur 142 via deux paires de liaisons 18 de sens opposés et le premier module 14A et entre le deuxième routeur 146 et le deuxième réseau 135 via deux paires de liaisons 18 de sens opposés 18 et le troisième module 14C. Les données sont transférées entre le premier routeur 142 et le deuxième routeur 146 par l'intermédiaire du premier serveur 143, du deuxième serveur 144 et du troisième serveur 147.

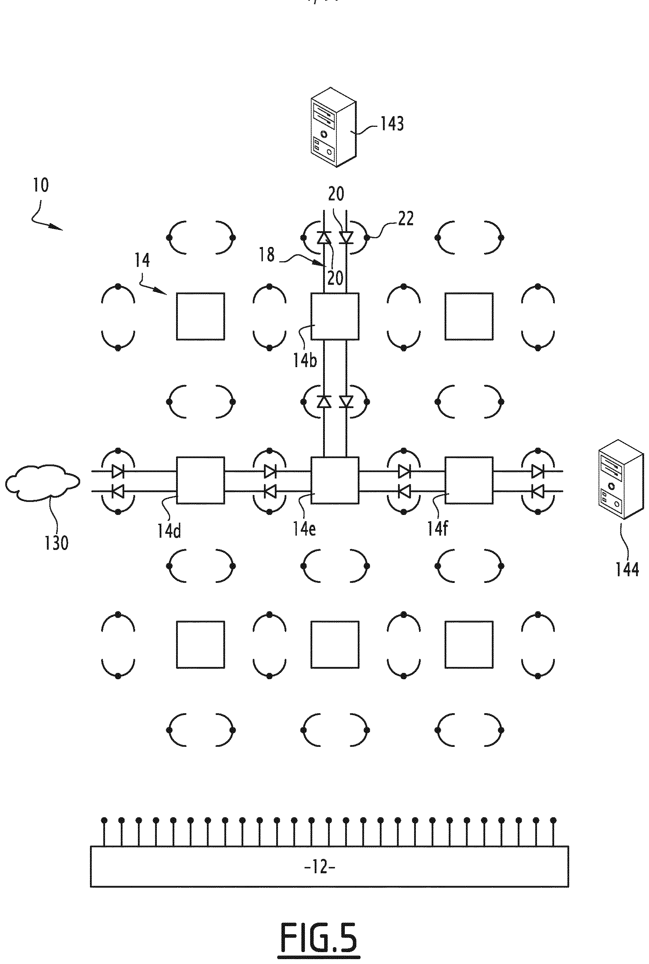

La figure 5 illustre un troisième exemple de mise en oeuvre du système électronique 10.

Selon ce troisième exemple de mise en oeuvre, au moins trois modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce troisième exemple de mise en oeuvre, les composants 20 sont sélectionnés et activés pour permettre le transfert bidirectionnel de données entre le quatrième module 14D et le premier réseau 130, entre le deuxième module 14B et le premier serveur 143 et entre le sixième module 14F et le deuxième serveur 144. En particulier, le cinquième module 14E est connecté par deux liaisons 18 de sens opposées au quatrième module 14D, le quatrième module 14D étant relié par deux liaisons 18 de sens opposés au premier réseau 130. Le cinquième module 14E est, en outre, connecté par deux liaisons 18 de sens opposés au deuxième module 14B, le deuxième module 14B étant relié par deux liaisons 18 de sens opposés au premier serveur 143. Le cinquième module 14E est, également, connecté par deux liaisons 18 de sens opposés au sixième module 14F, le sixième module 14F étant relié par deux liaisons 18 de sens opposés au deuxième serveur 144. Une telle configuration du système électronique 10 permet de former un pare-feu de routage. Un pare-feu de routage permet, notamment, de protéger des applications et de distribuer les flux applicatifs vers plusieurs serveurs.

En particulier, sur cette figure 5, les données sont propres à être transférées entre le réseau 130, le premier serveur 143 et le deuxième serveur 144 via quatre modules 14 et douze liaisons unidirectionnelles 18 de transfert de données. Le chemin de transfert de données a, dans ce troisième exemple, une forme en T.

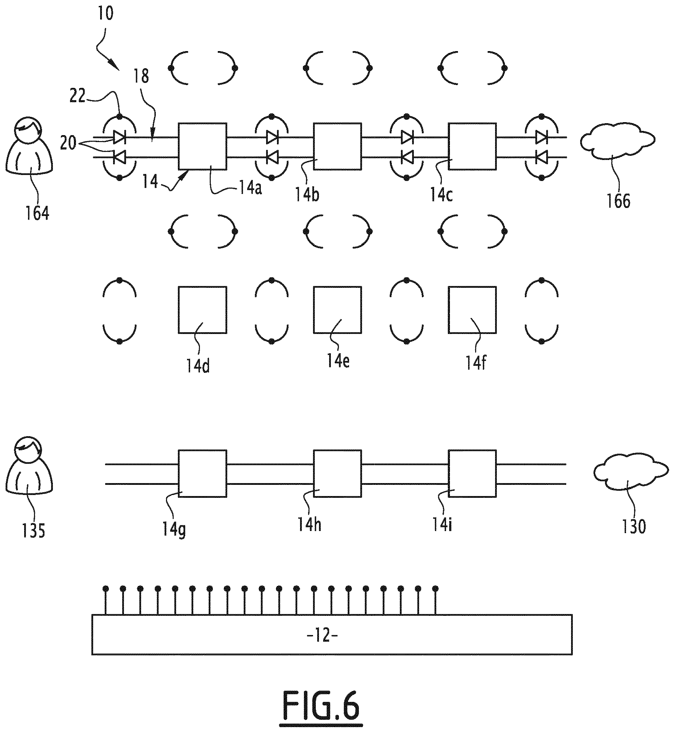

La figure 6 illustre un quatrième exemple de mise en oeuvre du système électronique 10.

Selon ce quatrième exemple de mise en oeuvre, au moins deux modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce quatrième exemple de mise en oeuvre, le huitième module 14H du système électronique 10 comporte un circuit intégré dédié ou un composant logique programmable. Le circuit intégré dédié ou le composant logique programmable intègre, par exemple, des fonctions de cryptage. Le septième module 14G, le huitième module 14H et le neuvième module 14l forment un premier groupe de modules. Les autres modules 14A à 14F forment un deuxième groupe de modules. Le premier groupe de modules est isolé du deuxième groupe de modules. En d'autres termes, les modules 14E, 14F et 14G du premier groupe de modules ne sont respectivement pas reliés aux modules 14G, 14H et 14l du deuxième groupe de modules via des liaisons 18. En outre, les modules du premier groupe de modules ne sont pas reliés entre eux ou avec l'extérieur par des liaisons 18. Le septième module 14G est connecté, d'une part, au deuxième réseau 135 et, d'autre part, au huitième module 14H via un câblage dédié. De même, le neuvième module 14l est connecté, d'une part, au premier réseau 130 et, d'autre part, au huitième module 14H via un câblage dédié.

Les composants 20 sont, en outre, sélectionnés et activés pour permettre le transfert bidirectionnel de données entre un troisième réseau 164 et un quatrième réseau 166. En particulier, le premier module 14A est connecté au troisième réseau 164 via deux liaisons 18 de sens opposés et au deuxième module 14B via deux autres liaisons 18 de sens opposés. Le deuxième module 14B est connecté au troisième module 14C via deux liaisons 18 de sens opposés. Le troisième module 14C est connecté au quatrième réseau 166 via deux liaisons 18 de sens opposés.

Une telle configuration du système électronique 10 permet de former une architecture cryptographique avec deux systèmes de ségrégation de réseau de type rouge-noire, notamment pour le domaine des passerelles multi-niveaux. Le premier système est basé sur trois modules 14 génériques. Le deuxième système est basé sur deux modules 14 génériques et un module 14 spécifique. L'intégration d'un circuit intégré dédié personnalisé permet de remplacer un processeur générique par une application plus spécifique apportant des garanties supplémentaires de sécurité de l'information.

En particulier, sur cette figure 6, les données sont propres à être transférées entre le troisième réseau 164 et le quatrième réseau 166 via trois modules 14 et de huit liaisons unidirectionnelles 18 de transfert de données.

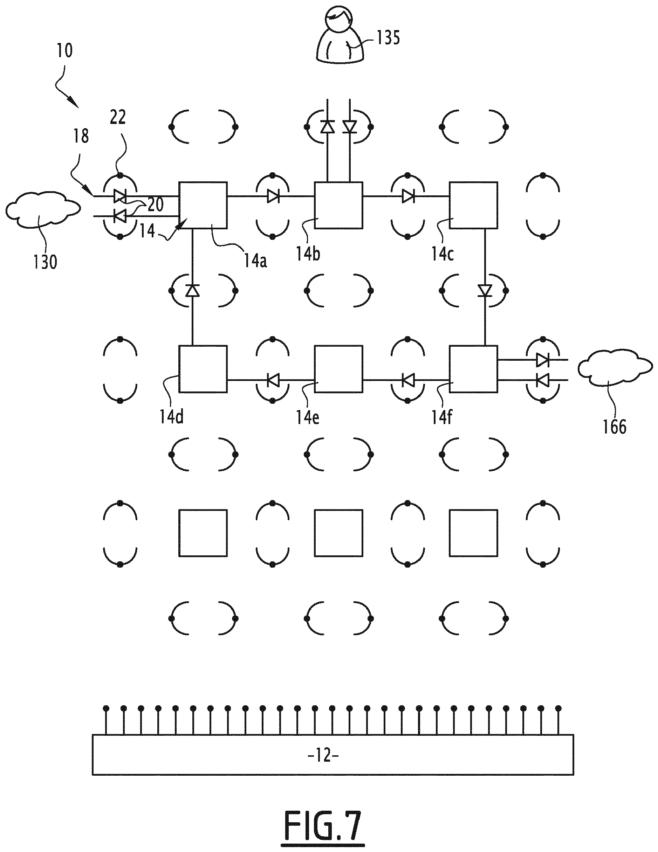

La figure 7 illustre un cinquième exemple de mise en oeuvre du système électronique 10.

Selon ce cinquième exemple de mise en oeuvre, au moins trois modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce cinquième exemple de mise en oeuvre, les composants 20 sont sélectionnés et activés pour permettre le transfert bidirectionnel de données entre le premier module 14A et le premier réseau 130, entre le deuxième module 14B et le deuxième réseau 135 et entre le sixième module 14F et le quatrième réseau 166. En outre, les composants 20 sont activés pour permettre le transfert unidirectionnel de données depuis le premier module 14A jusqu'au deuxième module 14B, depuis le deuxième module 14B jusqu'au troisième module 14C, depuis le troisième module 14C jusqu'au sixième module 14F, depuis le sixième module 14F jusqu'au cinquième module 14E, depuis le cinquième module 14E jusqu'au quatrième module 14D et depuis le quatrième module 14D jusqu'au premier module 14A. Une telle configuration du système électronique 10 permet de former un système asymétrique multi-niveaux, notamment pour le domaine des passerelles multi-niveaux.

En particulier, sur cette figure 7, les données sont propres à être transférées depuis le premier réseau 130 jusqu'au deuxième réseau 135, depuis le deuxième réseau 135 jusqu'au quatrième réseau 166, et depuis le quatrième réseau 166 jusqu'au premier réseau 130. Sur cette figure 7, six modules 14 servent d'intermédiaires au transfert de données et douze liaisons 18 sont utilisées. Le transfert de données entre deux modules 14 est unidirectionnel, puisque seule une liaison 18 est configurée pour relier deux modules 14. Le transfert de données entre un module 14 et l'un des éléments externes est bidirectionnel, deux liaisons 18 de sens opposés reliant le module 14 et l'élément externe.

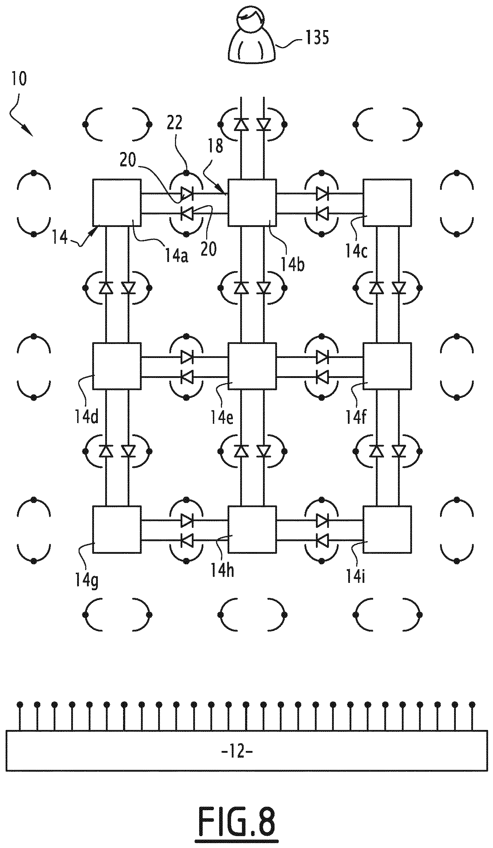

La figure 8 illustre un sixième exemple de mise en oeuvre du système électronique 10.

Selon ce sixième exemple de mise en oeuvre, au moins un module électronique 14 est connectable à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce sixième exemple de mise en oeuvre, les composants 20 sont sélectionnés et activés pour permettre le transfert bidirectionnel de données entre l'ensemble des modules 14 des paires respectives. En outre, les composants 20 sont également sélectionnés et activés pour permettre le transfert des données entre le deuxième module 14B et le deuxième réseau 135. Les données sont transférées directement entre le deuxième réseau 135 et le deuxième module 14B. Les liaisons 18 reliant les autres modules 14 à l'extérieur sont désactivées. Une telle configuration du système électronique 10 permet de former un serveur de calcul distribué, notamment pour le domaine du calcul scientifique.

En particulier, sur cette figure 8, les données sont propres à transiter par les neufs modules 14 du système électronique 10. Vingt-six liaisons 18 sont activées.

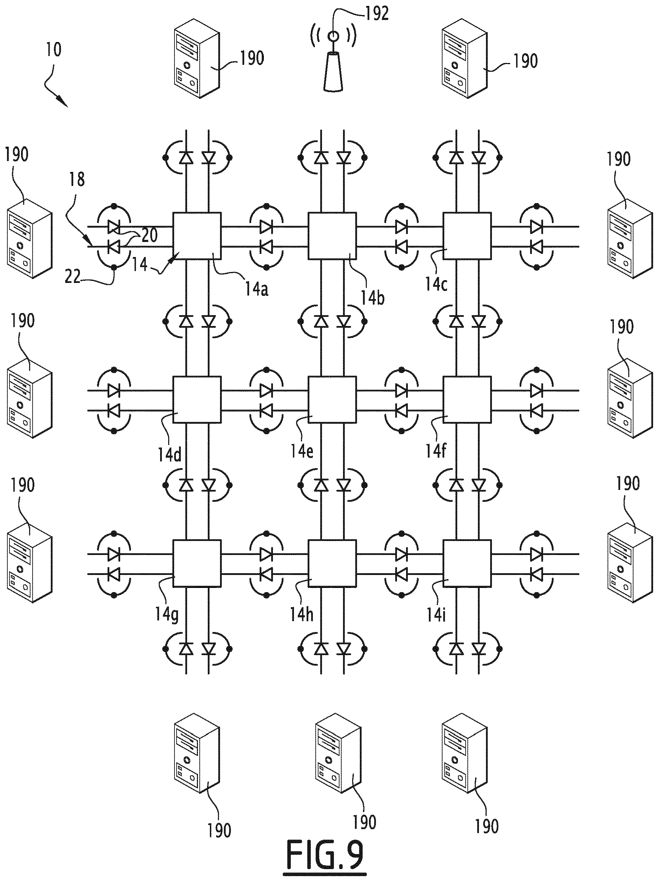

La figure 9 illustre un septième exemple de mise en oeuvre du système électronique 10.

Selon ce septième exemple de mise en oeuvre, au moins huit modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce septième exemple de mise en oeuvre, les composants 20 sont sélectionnés et activés pour permettre le transfert bidirectionnel de données entre l'ensemble des modules 14 des paires respectives. En outre, les composants 20 sont également sélectionnés et activés pour permettre le transfert bidirectionnel de données entre les modules 14 et des éléments externes : une pluralité de serveurs 190 et un système antennaire 192. En particulier, le premier module 14A, le troisième module 14B, le septième module 14G et le neuvième module 14l sont chacun connectés à deux serveurs 190 via deux paires de liaisons 18 de sens opposé. En outre, le quatrième module 14D, le sixième module 14F et le huitième module 14H sont chacun connectés à un serveur 190 par deux liaisons 18 de sens opposés. Le deuxième module 14B est connecté au système antennaire 192 via deux liaisons 18 de sens opposés. Une telle configuration du système électronique 10 permet de former un service de calcul distribué interconnecté avec des ressources complémentaires, notamment pour le domaine de la guerre électronique. La distribution des flux d'information vers les différents éléments externes peut être mise en oeuvre par un calcul préliminaire embarqué dans le système électronique 10.

En particulier, sur cette figure 9, les données sont propres à transiter par les neufs modules 14 du système électronique 10. L'ensemble des liaisons 18 est activé.

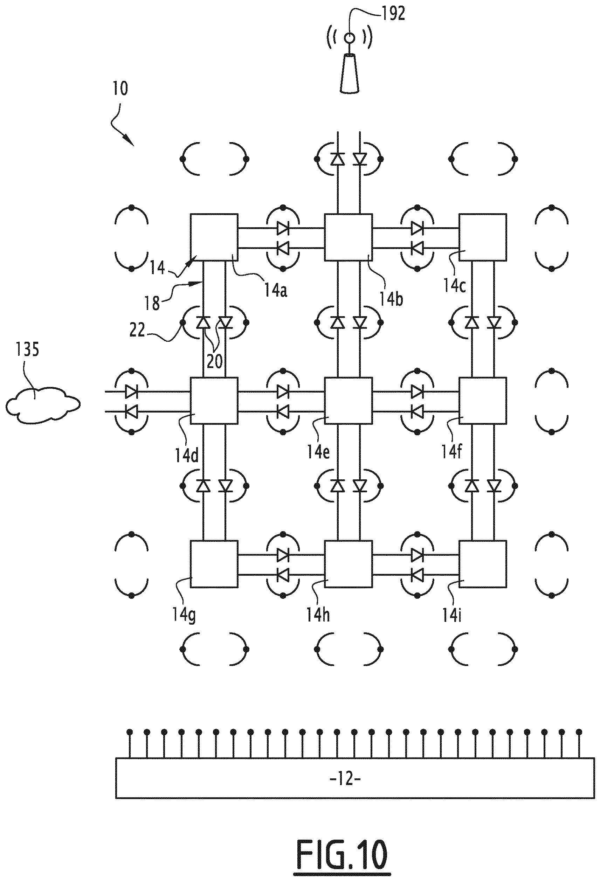

La figure 10 illustre un huitième exemple de mise en oeuvre du système électronique 10.

Selon ce huitième exemple de mise en oeuvre, au moins deux modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce huitième exemple de mise en oeuvre, les composants 20 sont sélectionnés et activés pour permettre le transfert bidirectionnel de données entre l'ensemble des modules 14 des paires respectives. En outre, les composants 20 sont également sélectionnés et activés pour permettre le transfert bidirectionnel de données entre, d'une part, le deuxième réseau 135 et le quatrième module 14E et, d'autre part, le deuxième module 14B et le système antennaire 192. Une telle configuration du système électronique 10 permet de former une ressource de calcul pour effectuer des calculs « en bande de base », notamment pour le domaine des radios logicielles. Les calculs en bande de base regroupent des opérations mathématiques requises pour fabriquer le signal radio initial des radios à architecture hétérodyne et superhétérodyne.

En particulier, sur cette figure 10, les données sont propres à transiter par les neuf modules 14 du système électronique 10. Vingt-huit liaisons 18 sont activées.

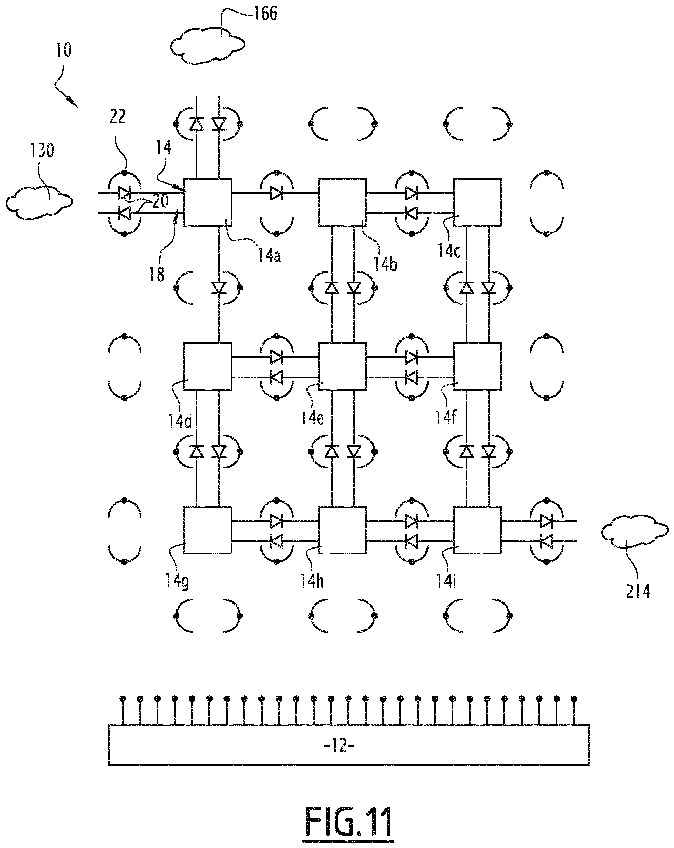

La figure 11 illustre un neuvième exemple de mise en oeuvre du système électronique 10.

Selon ce neuvième exemple de mise en oeuvre, au moins deux modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce neuvième exemple de mise en oeuvre, les composants 20 sont sélectionnés et activés pour permettre le transfert bidirectionnel de données entre le premier réseau 130 et le premier module 14A, entre le premier module 14A et le quatrième réseau 166 et entre le neuvième module 14l et un cinquième réseau 214. Le premier réseau 130 est, par exemple, un réseau internet. Le quatrième réseau 166 est, par exemple, un réseau local d'une société. Le cinquième réseau 214 est, par exemple, un réseau de protection. Les composants spécifiques sont, également, sélectionnées et activés de sorte à permettre le transfert unidirectionnel de données depuis le premier module 14A vers le deuxième module 14B et depuis le premier module 14A vers le quatrième module 14D. Les autres composants spécifiques entre les modules 14B, 14C, 14D, 14E, 14F, 14G, 14H et 14l sont sélectionnées et activés pour permettre un transfert bidirectionnel de données. Une telle configuration du système électronique 10 permet de former une ressource de calcul pour analyser les flux réseaux d'une entreprise, notamment pour le domaine des sondes souveraines afin de générer les flux de statistiques et d'alerte à destination de centres de surveillance. La puissance de calcul distribuée est pertinente pour des flux de débit moyens à élevés. Les sondes souveraines ou sondes propriétaires sont des sondes permettant de protéger l'intégrité de systèmes surveillés par ces sondes. Les sondes souveraines sont, notamment, propres à surveiller des réseaux, des architectures de systèmes, ainsi que les capacités techniques de réaction à une attaque. Les sondes souveraines permettent, en particulier, de détecter des intrusions ou des anomalies de sécurité et d'anticiper, ainsi d'éventuelles attaques.

En particulier, sur cette figure 11, les données sont propres à transiter par les neuf modules 14 du système électronique 10. Trente liaisons 18 sont activées.

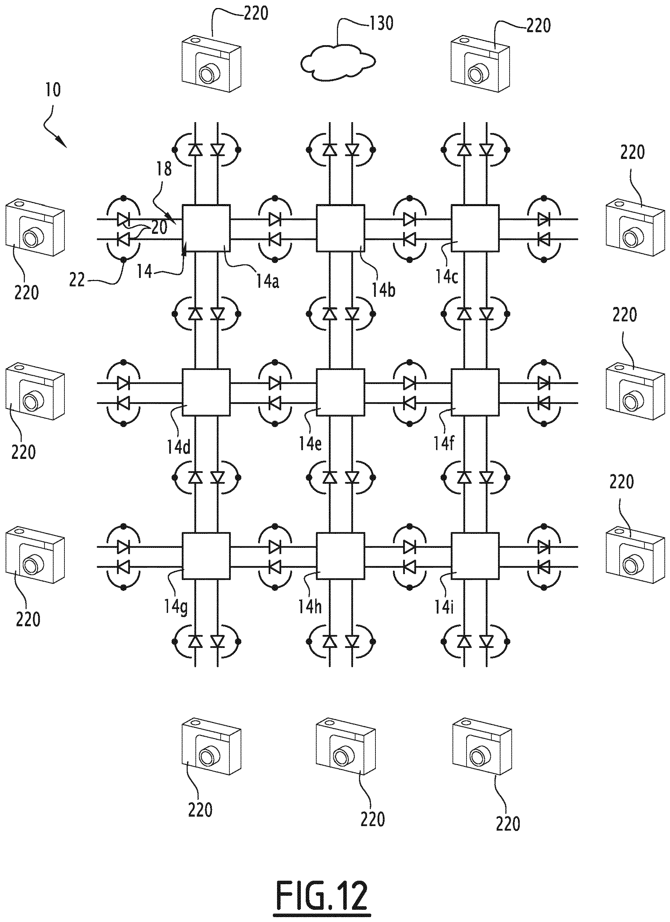

La figure 12 illustre un dixième exemple de mise en oeuvre du système électronique 10.

Selon ce dixième exemple de mise en oeuvre, au moins huit modules électroniques 14 sont chacun connectables à au moins un élément externe au système électronique 10 par au moins une liaison unidirectionnelle 18 de transfert de données depuis l'élément externe jusqu'au module 14 et au moins une liaison unidirectionnelle 18 de transfert de données depuis le module 14 jusqu'à l'élément externe.

Selon ce dixième exemple de mise en oeuvre, les composants 20 sont sélectionnés et activés pour permettre le transfert de données entre l'ensemble des modules 14 des paires respectives. En outre, les composants 20 sont également sélectionnés et activés pour permettre le transfert bidirectionnel de données entre l'ensemble des modules 14A à 14l, à l'exception du cinquième module 14E, et des éléments externes. En particulier, le premier module 14A, le troisième module 14B, le septième module 14G et le neuvième module 14l sont chacun connectés à deux périphériques, tels que des caméras 220, par deux paires de liaisons 18 de sens opposés. En outre, le quatrième module 14D, le sixième module 14F et le huitième module 14H sont chacun connectés à une caméra par deux liaisons 18 de sens opposés. Le deuxième module 14B est connecté au premier réseau 130 par deux liaisons 18 de sens opposés. Une telle configuration du système électronique 10 permet de former une ressource d'agrégation de flux vidéo pour prétraiter des informations transitant en direction d'un centre de vidéo surveillance, notamment pour le domaine de la vidéo-surveillance.

En particulier, sur cette figure 12, les données sont propres à transiter par les neufs modules du système électronique 10. L'ensemble des liaisons 18 est activé.

Ainsi, le système électronique 10 est configurable pour mettre dynamiquement en oeuvre différents types de chemins de transfert de données et orienter le cheminement de l'information. En effet, le système électronique 10 est alors utilisable pour des applications variées, notamment, la réalisation de pares-feux, d'une passerelle multi-niveaux permettant de ségréger des réseaux de niveaux différents de confidentialité, d'une ressource de calcul générique ou encore d'un système de distribution d'information.

Le système électronique 10 est simple à mettre en oeuvre, et simple à reconfigurer. Le coût d'un tel système est sensiblement plus faible qu'une passerelle multi-niveaux de l'état de la technique. Le système électronique 10 forme donc une solution générique permettant de diminuer les coûts et de concerner différents domaines.

Un tel système électronique 10 permet d'établir un transfert unidirectionnel de données entre deux modules 14. Chaque liaison 18 étant unidirectionnelle, les fuites de données lors du transfert d'information sont maîtrisées par un composant physique à la conception simple et aux caractéristiques vérifiables. Dans le cas où les deux liaisons 18 de sens opposés entre deux modules 14 sont activées en même temps, le transfert est bidirectionnel.

Le système électronique 10 permet donc d'interconnecter de manière aisée plusieurs réseaux de niveaux différents de sensibilité, tout en évitant les fuites de données lors du transfert d'informations.

Bien entendu, l'homme du métier comprendra que les exemples de mise en oeuvre ne se limitent pas à l'agencement des modules 14 tel qu'illustré sur les figures 3 à 12.

En outre, en variante, le système électronique 10 comprend un nombre de modules 14 et de liaisons 18 adapté à la mise en oeuvre d'une combinaison d'un ou de plusieurs des exemples de mise en oeuvre tels qu'illustrés sur les figures 3 à 12.

## Revendications

1. Procédé de configuration d'un système électronique (10), le système électronique (10) étant un système configurable de transfert de données, le système électronique comprenant :
- au moins un module électronique (14) de traitement de données, et
- une pluralité de paires de liaisons unidirectionnelles (18) de transfert de données, chaque liaison unidirectionnelle (18) comportant au moins un composant unidirectionnel commandable (20) entre une configuration activée de transfert des données et une configuration désactivée de blocage des données,
chaque paire respective de liaisons unidirectionnelles (18) étant reliée à au moins un module électronique (14) et comportant deux liaisons unidirectionnelles (18) agencées en sens opposés, les modules électroniques (14) étant disposés sous forme d'une matrice, au moins un composant unidirectionnel commandable (20) étant un composant optique.
le système électronique (10) comportant au moins six modules électroniques (14), au moins trois modules électroniques (14) étant chacun connectable à au moins un élément (130, 135, 142, 143, 144, 146, 147, 164, 166, 190, 192, 214, 220) externe au système électronique (10) par au moins une liaison unidirectionnelle (18) de transfert de données depuis l'élément externe jusqu'au module (14) et au moins une liaison unidirectionnelle (18) de transfert de données depuis le module (14) jusqu'à l'élément externe,
le procédé comprenant :
- l'envoi d'une commande de désactivation (100) de chaque composant (20), et
- l'envoi d'une commande d'activation (110) d'une sélection de composants (20) pour définir un chemin de transfert de données,
lors de l'étape d'envoi d'une commande d'activation (110), la sélection de composants (20) étant activée pour permettre le transfert bidirectionnel de données entre trois éléments externes (130, 135, 166) et les au moins trois modules électroniques (14A, 14B, 14F) et pour permettre le transfert unidirectionnel de données entre les au moins trois modules (14A, 14B, 14F) et les au moins trois autres modules électroniques (14C, 14D, 14E), les trois éléments externes (130, 135, 166) étant trois réseaux (130, 135, 166), le système électronique (10) formant alors un système asymétrique multiniveaux.

2. Procédé selon la revendication 1, dans lequel les au moins trois modules électroniques (14A, 14B, 14F) et les au moins trois autres modules électroniques (14C, 14D, 14E) sont chacun au nombre de trois.

3. Procédé selon la revendication 1 ou 2, dans lequel chaque composant (20) de chaque liaison (18) est commandable indépendamment des composants (20) des autres liaisons (18).

4. Procédé selon l'une quelconque des revendications 1 à 3, dans lequel chaque composant (20) est commandable à distance via un module de commande (12) indépendant du système électronique (10).

5. Procédé selon l'une quelconque des revendications précédentes, dans lequel au moins l'un des modules électroniques (14) comprend un circuit intégré dédié ou un composant logique programmable.

6. Procédé) selon l'une quelconque des revendications précédentes, dans lequel chaque liaison (18) est conforme à une norme filaire telle que la norme IEEE 802.3 ou la norme PCI-Express.

7. Procédé selon l'une quelconque des revendications précédentes, dans lequel au moins l'un des modules (14) comprend un système informatique formé d'un processeur et d'une mémoire de stockage permettant la mise en oeuvre d'un système d'exploitation et d'au moins une application stockés dans la mémoire.

8. Procédé selon l'une quelconque des revendications précédentes, dans lequel le système électronique (10) est en forme d'un circuit intégré.

## Patentansprüche

1. Verfahren zum Konfigurieren eines elektronischen Systems (10), wobei das elektronische System (10) ein System ist, das mittels Datenübertragung konfigurierbar ist, das elektronische System aufweisend:
- mindestens ein elektronisches Datenverarbeitungsmodul (14), und
- eine Mehrzahl von Paaren von unidirektionalen Datenübertragungsverbindungen (18), wobei jede unidirektionale Verbindung (18) mindestens ein unidirektionales Bauteil (20) aufweist, das zwischen einer aktivierten Konfiguration zur Datenübertragung und einer deaktivierten Konfiguration zur Datenblockade steuerbar ist,
wobei jedes Paar von jeweiligen unidirektionalen Verbindungen (18) mit mindestens einem elektronischen Modul (14) verbunden ist und zwei unidirektionale Verbindungen (18), die in entgegengesetzter Richtung angeordnet sind, aufweist, wobei die elektronischen Module (14) in Form einer Matrix angeordnet sind, wobei mindestens ein steuerbares unidirektionales Bauteil (20) ein optisches Bauteil ist.
wobei das elektronische System (10) mindestens sechs elektronische Module (14) aufweist, wobei mindestens drei elektronische Module (14) jeweils mit mindestens einem Element (130, 135, 142, 143, 144, 146, 147, 164, 166, 190, 192, 214, 220) außerhalb des elektronischen Systems (10) mittels mindestens einer unidirektionalen Datenübertragungsverbindung (18) vom externen Element zum Modul (14) und mindestens einer unidirektionalen Datenübertragungsverbindung (18) von dem Modul (14) zum externen Element verbindbar sind,
das Verfahren aufweisend:
- Senden eines Deaktivierungsbefehls (100) für jedes Bauteil (20), und
- Senden eines Aktivierungsbefehls (110) für eine Auswahl von Bauteilen (20) zum Definieren eines Datenübertragungspfads,
während des Schrittes des Sendens eines Aktivierungsbefehls (110), das Auswählen von Bauteilen (20), die zum Zulassen der bidirektionalen Datenübertragung zwischen drei externen Elementen (130, 135, 166) und den mindestens drei elektronischen Modulen (14A, 14B, 14F) und zum Zulassen der unidirektionalen Datenübertragung zwischen den mindestens drei Modulen (14A, 14B, 14F) und den mindestens drei anderen elektronischen Modulen (14C, 14D, 14E) aktiviert sind, wobei die drei externen Elemente (130, 135, 166) drei Netzwerke (130, 135, 166) sind, wobei das elektronische System (10) dann ein mehrstufiges asymmetrisches System bildet.

2. Verfahren gemäß Anspruch 1, wobei die mindestens drei elektronischen Module (14A, 14B, 14F) und die mindestens drei anderen elektronischen Module (14C, 14D, 14E) jeweils die Anzahl drei haben.

3. Verfahren gemäß Anspruch 1 oder 2, wobei jedes Bauteil (20) jeder Verbindung (18) unabhängig von den Bauteilen (20) der anderen Verbindungen (18) gesteuert werden kann.

4. Verfahren gemäß einem der Ansprüche 1 bis 3, wobei jedes Bauteil (20) mittels eines Steuermoduls (12) unabhängig von dem elektronischen System (10) ferngesteuert werden kann.

5. Verfahren gemäß einem der vorangehenden Ansprüche, wobei mindestens eines der elektronischen Module (14) eine zugeordnete integrierte Schaltung oder ein programmierbares logisches Bauteil aufweist.

6. Verfahren gemäß einem der vorangehenden Ansprüche, wobei jede Verbindung (18) einem Drahtverbindungsstandard wie dem Standard IEEE 802.3 oder dem PCI-Express-Standard entspricht.

7. Verfahren gemäß einem der vorangehenden Ansprüche, wobei mindestens eines der Module (14) ein Computersystem aufweist, das aus einem Prozessor und einem Speicher gebildet ist und die Ausführung eines Betriebssystems und mindestens einer in dem Speicher gespeicherten Anwendung ermöglicht.

8. Verfahren gemäß einem der vorangehenden Ansprüche, wobei das elektronische System (10) in Form einer integrierten Schaltung ausgebildet ist.

## Claims

1. Method for configuring an electronic system (10), the electronic system (10) being a configurable system for transferring data, the electronic system comprising:
- at least one electronic module (14) for processing data, and
- a plurality of pairs of unidirectional links (18) for transferring data, each unidirectional link (18) comprising at least one controllable unidirectional component (20) which is controllable between an activated configuration for transferring data and a deactivated configuration for blocking data,
each respective pair of unidirectional links (18) being connected to at least one electronic module (14) and comprising two unidirectional links (18) arranged in opposite directions, the electronic modules (14) being arranged in the form of a matrix, at least one controllable unidirectional component (20) being an optical component,
the electronic system (10) comprising at least six electronic modules (14), at least three electronic modules (14) each being connectable to at least one element (130, 135, 142, 143, 144, 146, 147, 164, 166, 190, 192, 214, 220) external to the electronic system (10) by at least one unidirectional link (18) for transferring data from the external element to the module (14) and at least one unidirectional link (18) for transferring data from the module (14) to the external element,
the method comprising:
- sending a deactivation command (100) for each component (20), and
- sending an activation command (110) for a selection of components (20) in order to define a data transfer path,
during the step of sending an activation command (100), the selection of components (20) being activated in order to permit the bidirectional transfer of data between three external elements (130, 135, 166) and the at least three electronic modules (14A, 14B, 14F) and to permit the unidirectional transfer of data between the at least three modules (14A, 14B, 14F) and the at least three other electronic modules (14C, 14D, 14E), the three external elements (130, 135, 166) being three networks (130, 135, 166), the electronic system (10) then forming an asymmetric multilevel system.

2. Method according to claim 1, wherein the at least three electronic modules (14A, 14B, 14F) and the at least three other electronic modules (14C, 14D, 14E) each number three.

3. Method according to claim 1 or 2, wherein each component (20) of each link (18) is controllable independently of the components (20) of the other links (18).

4. Method according to any one of claims 1 to 3, wherein each component (20) is controllable remotely *via* a control module (12) which is independent of the electronic system (10).

5. Method according to any one of the preceding claims, wherein at least one of the electronic modules (14) comprises a dedicated integrated circuit or a programmable logic component.

6. Method according to any one of the preceding claims, wherein each link (18) complies with a wired standard such as standard IEEE 802.3 or standard PCI Express.

7. Method according to any one of the preceding claims, wherein at least one of the modules (14) comprises a computing system formed of a processor and a storage memory allowing an operating system and at least one application stored in the memory to be executed.

8. Method according to any one of the preceding claims, wherein the electronic system (10) is in the form of an integrated circuit.
